# EUROPEAN PATENT APPLICATION

(11) **EP 4 682 479 A1**
(43) Date of publication of application: **21.01.2026**
(21) Application number: 24919346.7
(22) Date of filing: 26.01.2024
(51) Int. Cl.: G01F 1/84, G01F 25/10, G01N 9/32, G01N 11/04

(54) **CORIOLIS FLOWMETER COMPRISING A PLURALITY OF MEASUREMENT AREAS**

(30) Priority: 22.01.2024 CN 202410087175
(71) Applicant: Walsn Measurement and Control Technology (Hebei) Co., Ltd., Langfang, Hebei 065000 (CN); Walsn Limited, Canterbury, Kent CT2 7FG (GB)
(72) Inventor: WANG, Tao, Langfang, Hebei 065000 (CN); PAN, Juguang, Langfang, Hebei 065000 (CN)
(74) Representative: Porta & Consulenti Associati S.p.A.
(86) International application number: PCT/CN2024/074134
(87) International publication number: WO 2025/156237

(57) **Abstract**

Disclosed is a Coriolis flowmeter comprising a plurality of measurement areas. The Coriolis flowmeter comprises a flow tube and a flow transmitter. The flow tube comprises at least a first measurement area and a second measurement area. A first driving device and a first measurement device are mounted in the first measurement area, and a second driving device and a second measurement device are mounted in the second measurement area. The first measurement device and the second measurement device are both connected to the flow transmitter so as to transmit measurement values of the first measurement device and the second measurement device to the flow transmitter. The first measurement area uses the Coriolis principle to measure at least one of the mass flow and the density of an internal medium, and the second measurement area and the first measurement area both measure the mass flow and/or the density of the internal medium. Compared with the prior art, in the present invention, measurement values of a same parameter of a medium in a flow tube in two measurement areas are compared, so that a measurement result can be verified online, and a high-precision real-time diagnosis method based on sensor design is provided, thereby avoiding production interruption caused by regular calibration of the Coriolis flowmeter.

## Description

### TECHNICAL FIELD

The present invention relates to the technical field of Coriolis flowmeters, in particular to a Coriolis flowmeter with multiple measurement zones.

### BACKGROUND

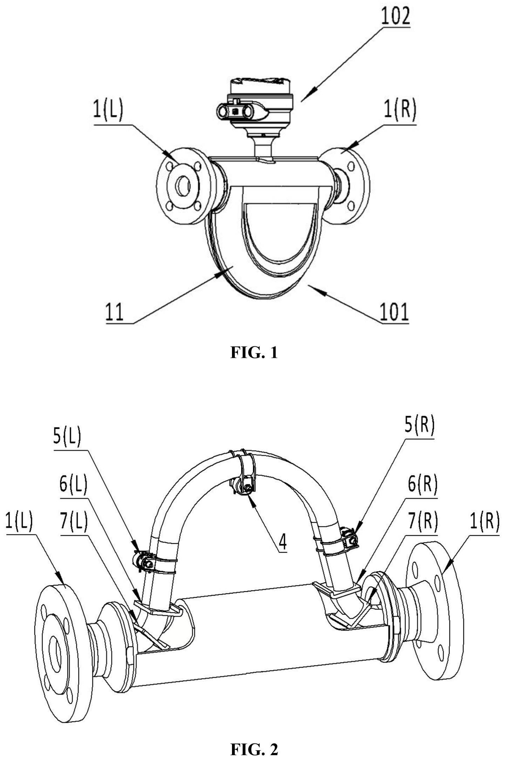

The Coriolis flowmeter is a mass flow measuring device based on Coriolis principle, and the density of a medium can also be measured. Referring to FIG. 1, the Coriolis flowmeter includes a flow sensor and a flow transmitter. The flow sensor includes an external structure and an internal structure. The external structure includes a sensor housing and flanges.

Referring to FIG. 2, the internal structure includes flow tubes, a driving device, detection devices and gusset plates. A measured medium flows through the flow tubes. The gusset plates are fixed to the sensor housing. The flow tubes passe through the gusset plates. A measurement zone is located between two gusset plates, and the driving device and the detection devices are installed at the portion, located in the measurement zone, of the flow tube. The measurement zone is subjected to continuous tiny vibration under the action of the driving device. The detection devices detect the tiny vibration and transmit vibration information to the flow transmitter. The flow transmitter receives the vibration information and performs operation processing, and finally obtains the parameters, such as mass flow and density, of the measured medium. The existing Coriolis flowmeter is usually provided with only one measurement zone.

In the using process of the Coriolis flowmeter, if the accuracy of the Coriolis flowmeter changes, the change is not easy to discover without verification by other equipment. In order to ensure the accuracy of the Coriolis flowmeter to be effective, many customers will regularly calibrate the Coriolis flowmeters being used, thus greatly increasing the usage cost of users and even causing production interruption.

### SUMMARY

The present invention aims to provide a Coriolis flowmeter with multiple measurement zones. Flow tubes are provided with at least two measurement zones. One of the measurement zones measures the mass flow and the density with Coriolis principle, and other measurement zones at least measure the density at the same time. Since the same medium is measured, the measurement results can be verified on line without interrupting the production process by comparing the measured values of two zones.

In order to achieve the above-mentioned purpose, the present invention provides the following solutions.

The present invention provides a Coriolis flowmeter with multiple measurement zones, including at least one flow tube and a flow transmitter. The at least one flow tube has at least a first measurement zone and a second measurement zone. A first driving device and a first detection device are installed in the first measurement zone, and a second driving device and a second detection device are installed in the second measurement zone. Both the first detection device and the second detection device are connected to the flow transmitter to transmit respective measured values to the flow transmitter. The first measurement zone measures at least one of mass flow and density of a medium with Coriolis principle, and the second measurement zone measures the mass flow and/or the density of the medium simultaneously with the first measurement zone .

In some embodiments, the at least one flow tube includes multiple flow tubes, and the multiple flow tubes have the same material, track, wall thickness and cross-sectional shape.

In some embodiments, the at least one flow tube includes a first section and a second section. The first measurement zone is located in the first section, and the second measurement zone is located in the second section. The first section is in splicing connection with the second section.

In some embodiments, the at least one flow tube includes a connector. Two ends of the connector are respectively connected to the first section and the second section to achieve indirect splicing connection of the first section and the second section.

In some embodiments, at least one of the first measurement zone and the second measurement zone is a straight tube to measure viscosity of the medium at the straight tube.

In some embodiments, the first driving device is fixedly connected with the first detection device, and the second driving device is fixedly connected with the second detection device.

In some embodiments, the first driving device and the first detection device are separated from each other, the second driving device and the second detection device are separated from each other.

In some embodiments, at least one gusset plate is arranged between the first measurement zone and the second measurement zone.

In some embodiments, parameters jointly measured by the first measurement zone and the second measurement zone include the mass flow of the medium, and the flow transmitter is configured to calculate weighted average of measured values of the mass flow obtained by the first measurement zone and the second measurement zone. And/or, the parameters jointly measured by the first measurement zone and the measurement zone include the density of the medium, and the flow transmitter is configured to calculate weighted average of measured values of the density obtained by the first measurement zone and the second measurement zone.

In some embodiments, an alarm threshold value is set in the flow transmitter to enable the flow transmitter to send out an alarm signal when an absolute value of a difference between the parameters jointly measured by the first measurement zone and the second measurement zone is greater than the alarm threshold value.

Compared with the prior art, the embodiments of the present invention achieve the following technical effects.

At least two measurement zones are designed on the at least one flow tube in the present invention, the first measurement zone measures at least one of the mass flow and the density of an internal medium with Coriolis principle, and the and the second measurement zone and the first measurement zone measure the mass flow and/or the density of the internal medium simultaneously. Since the first measurement zone and the second measurement zone measure the same medium at the same time, the measurement results of the first measurement zone can be verified on line by comparing the measured values of the same parameter (such as density and mass flow) of the medium in two measurement zones, so that a high-precision real-time diagnosis method designed based on the sensor is provided to avoid the production interruption caused by the periodic calibration of the Coriolis flowmeter. In the preferred embodiment of the present invention, the uncertainty of the Coriolis flowmeter can be effectively reduced for high-accuracy real-time diagnosis, and the mass flow, the density and the viscosity of the medium in the flow tube can even be measured at the same time.

### BRIEF DESCRIPTION OF THE DRAWINGS

To more clearly illustrate the technical solutions in embodiments of the present invention or in the prior art, the following briefly introduces the attached figures to be used in the embodiments. Apparently, the attached figures in the following description show merely some embodiments of the present invention, and those skilled in the art can still derive other drawings from these attached figures without creative efforts.
FIG. 1 is a structure diagram of the existing Coriolis flowmeter.
FIG. 2 is an internal structure diagram of FIG. 1.
FIG. 3 is a schematic diagram of a Coriolis flowmeter with multiple measurement zones according to a first embodiment of the present invention.
FIG. 4 is a schematic diagram of a Coriolis flowmeter with multiple measurement zones according to a second embodiment of the present invention.
FIG. 5 is a schematic diagram of a Coriolis flowmeter with multiple measurement zones according to a third embodiment of the present invention.
FIG. 6 is a schematic diagram of a Coriolis flowmeter with multiple measurement zones according to a fourth embodiment of the present invention.
FIG. 7 is a schematic diagram of a Coriolis flowmeter with multiple measurement zones according to a fifth embodiment of the present invention.
FIG. 8 is a schematic diagram of a Coriolis flowmeter with multiple measurement zones according to a sixth embodiment of the present invention.
FIG. 9 is a schematic diagram of a Coriolis flowmeter with multiple measurement zones according to a seventh embodiment of the present invention.
FIG. 10 is a partial enlarged view of part Y in FIG. 9.

Reference signs in attached figures:

In FIG. 1, 101 flow sensor; 102 flow transmitter; 1(L) flange; 1(R) flange; and 11 sensor housing.

In FIG. 2, 1(L) flange; 1(R) flange; 4 driving device; 5(L) detection device; 5(R) detection device; 6(L) gusset plate; 6(R) gusset plate; 7(L) gusset plate; and 7(R) gusset plate.

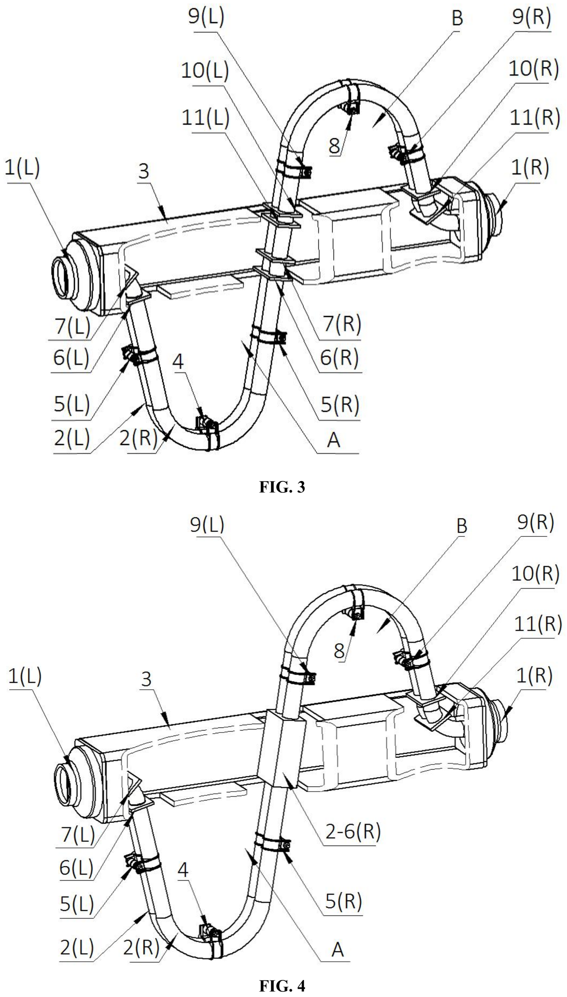

In FIG. 3 (embodiment I ), A first measurement zone; B second measurement zone; 1(L) flange; 1(R) flange; 2(L) flow tube; 2(R) flow tube; 3 sleeve; 4 driving device; 5(L) detection device; 5(R) detection device; 6(L) gusset plate; 6(R) gusset plate; 7(L) gusset plate; 7(R) gusset plate; 8 driving device; 9(L) detection device; 9(R) detection device; 10(L) gusset plate; 10(R) gusset plate; 11(L) gusset plate; and 11(R) gusset plate.

In FIG. 4 (embodiment II), A first measurement zone; B second measurement zone; 1(L) flange; 1(R) flange; 2(L) flow tube; 2(R) flow tube; 3 sleeve; 4 driving device; 5(L) detection device; 5(R) detection device; 6(L) gusset plate; 7(L) gusset plate; 8 driving device; 9(L) detection device; 9(R) detection device; 10(R) gusset plate; 11(R) gusset plate; and 2-6(R) gusset plate.

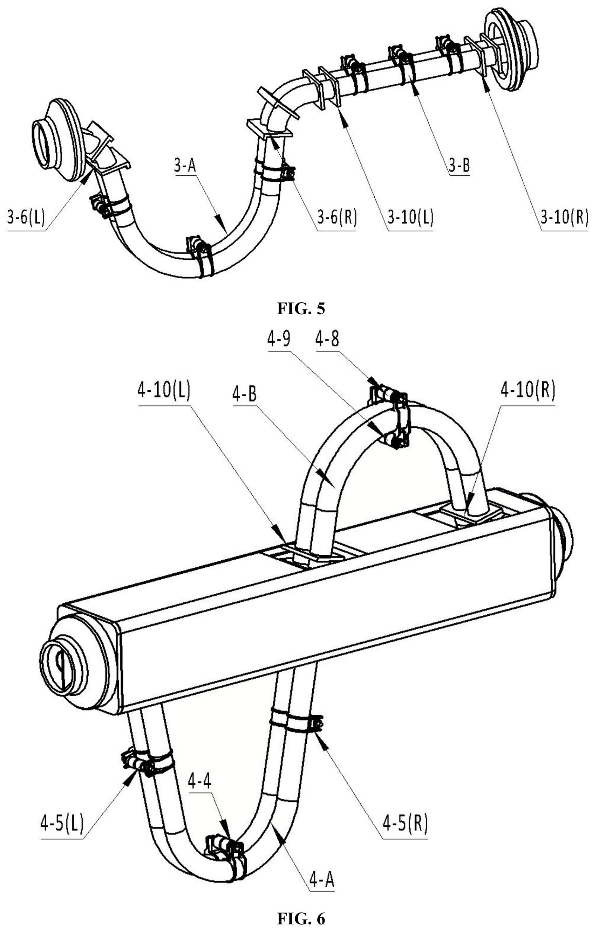

In FIG. 5 (embodiment III), 3-A first measurement zone; 3-B second measurement zone; 3-6(L) gusset plate; 3-6(R) gusset plate; 3-10(L) gusset plate; and 3-10(R) gusset plate.

In FIG. 6 (embodiment IV), 4-A first measurement zone; 4-B second measurement zone; 4-4 driving device; 4-5(L) detection device; 4-5(R) detection device; 4-8 driving device; 4-9 detection device; 4-10(L) gusset plate; and 4-10(R) gusset plate.

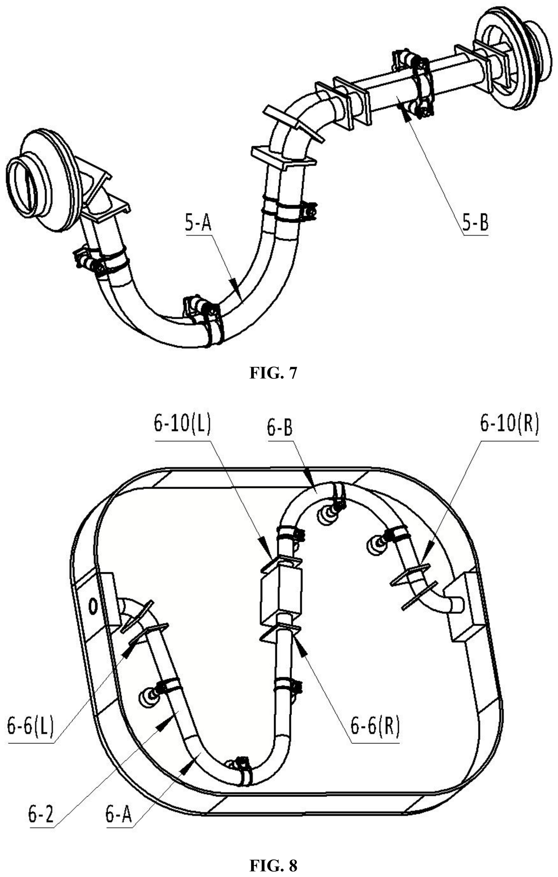

In FIG. 7 (embodiment V), 5-A first measurement zone; and 5-B second measurement zone.

In FIG. 8 (embodiment VI), 6-A first measurement zone; 6-B second measurement zone; 6-2 flow tube; 6-6(L) gusset plate; 6-6(R) gusset plate; 6-10(L) gusset plate; and 6-10(R) gusset plate.

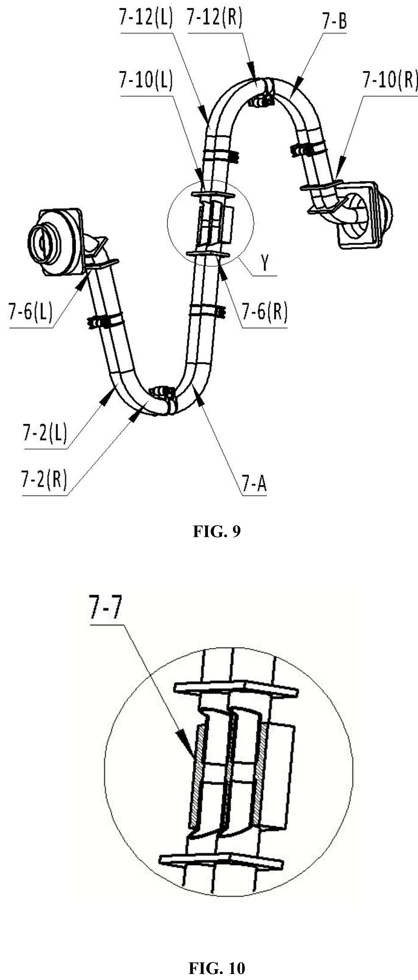

In FIG. 9 (embodiment VII), 7-A first measurement zone; 7-B second measurement zone; 7-2(L) flow tube; 7-2(R) flow tube; 7-6(L) gusset plate; 7-6(R) gusset plate; 7-10(L) gusset plate; 7-10(R) gusset plate; 7-12(L) flow tube; and 7-12(R) flow tube.

In FIG. 10 (embodiment VII), 7-7 connector.

### DETAILED DESCRIPTION OF THE EMBODIMENTS

The following clearly and completely describes the technical solutions in the embodiments of the present invention with reference to the attached figures of the embodiments of the present invention. Apparently, the described embodiments are merely a part rather than all of the embodiments of the present invention. Based on the embodiments in the present invention, all other embodiments acquired by those skilled in the art without creative labor belong to the scope protected by the present invention.

The present invention aims to provide a Coriolis flowmeter with multiple measurement zones. At least one flow tube has at least two measurement zones. One of the measurement zones measures the mass flow and the density with Coriolis principle, and other measurement zones at least measure the density at the same time. Since the same medium is measured, the measurement results can be verified on line without interrupting the production process by comparing the measured values of two zones.

Referring to FIG. 3 to FIG. 10, the embodiments provide a Coriolis flowmeter with multiple measurement zones, including at least one flow tube and a flow transmitter. The at least one flow tubes has at least a first measurement zone and a second measurement zone. A first driving device and a first detection device are installed in the first measurement zone, and a second driving device and a second detection device are installed in the second measurement zone. Both the first detection device and the second detection device are connected to the flow transmitter to transmit respective measured values to the flow transmitter. The first measurement zone (namely a main measurement zone) measures at least one of the mass flow and the density of an internal medium with Coriolis principle, and the second measurement zone (namely an auxiliary measurement zone) measures the mass flow and/or the density of the internal medium simultaneously with the first measurement zone.

The working principle of the Coriolis flowmeter with multiple measurement zones is as follows.

At least two measurement zones are designed on the at least one flow tube in the embodiment, the first measurement zone measures at least one of the mass flow and the density of the internal medium with Coriolis principle, and the second measurement zone measures the mass flow and/or the density of the internal medium simultaneously with the first measurement zone. That is, when the first measurement zone only measures the mass flow of the internal medium, the second measurement zone at least simultaneously measures the mass flow of the internal medium. When the first measurement zone only measures the density of the internal medium, the second measurement zone at least simultaneously measures the density of the internal medium. When the first measurement zone simultaneously measures the mass flow and the density of the internal medium, the second measurement zone measures at least one of the mass flow and the density of the internal medium.

Since the first measurement zone and the second measurement zone measure the same medium at the same time, the measurement results of the first measurement zone can be verified on line by comparing the measured values of the same parameter (such as the density and the mass flow) of the medium in two measurement zones, so that a high-precision real-time diagnosis method designed based on the sensor is provided.

Exemplarily, only one flow tube or multiple flow tubes may be provided. When multiple flow tubes are provided, it is preferable that the multiple flow tubes have the same material, track, wall thickness and cross-sectional shape.

Exemplarily, the flow tube may be one-piece or spliced together. When the flow tube is spliced, the following conditions are included.

In one condition, the flow tube includes a first section and a second section. The first measurement zone is located in the first section, and the second measurement zone is located in the second section. The first section is in splicing connection (such as in adhering connection, welding connection, threaded connection and buckle connection) with the second section.

In another condition, the flow tube includes a connector. Both ends of the connector are respectively connected (such as in adhering connection, welding connection, threaded connection and buckle connection) to an end of the first section and an end of the second section to achieve indirect splicing connection of the first section and the second section.

Exemplarily, at least one of the first measurement zone and the second measurement zone is a straight tube to apply an expected natural vibration at the straight tube by the driving device, so that the flow tube is twisted to measure the viscosity of the medium in the flow tube. When it is not necessary to measure the viscosity, both the first measurement zone and the second measurement zone may be V-shaped.

Exemplarily, the first driving device is fixedly connected with the first detection device, and the second driving device is fixedly connected with the second detection device. It is understandable that the first driving device and the first detection device may be separated from each other, and the second driving device and the second detection device may also be separated from each other.

Exemplarily, at least one gusset plate is arranged between the first measurement zone and the second measurement zone, thereby improving the stability of the flow tube and achieving a vibration isolation effect to avoid or minimize the mutual influence of the vibration generated by the first driving device and the vibration generated by the second driving device as much as possible.

Exemplarily, parameters jointly measured by the first measurement zone and the second measurement zone include the mass flow of the medium, the flow transmitter is configured to calculate weighted average of measured values of the mass flow obtained by the first measurement zone and the second measurement zone. And/or, the parameters jointly measured by the first measurement zone and the measurement zone include the density of the medium, and the flow transmitter is configured to calculate weighted average of measured values of the density obtained by the first measurement zone and the second measurement zone. The weighted average of the corresponding parameters is obtained through calculation to improve the accuracy.

Exemplarily, an alarm threshold value (the alarm threshold value is larger than zero) is preset in the flow transmitter to enable the flow transmitter to send out an alarm signal when the absolute value of the difference between the parameters jointly measured by the first measurement zone and the second measurement zone is greater than the alarm threshold value, thus reminding a user of problems possibly appearing in the Coriolis flowmeter with multiple measurement zones.

The technical solutions of the present invention are further described below in combination with embodiment I to embodiment VIII.

### Embodiment I

Referring to FIG. 3, this embodiment provides a Coriolis flowmeter with multiple measurement zones.

The flow tube 2(L) and the flow tube 2(R) have the same diameter, wall thickness, track and material.

Both the splitter 1(L) and the splitter 1(R) are fixed to the sleeve 3.

Both ends of the flow tube 2(L) and both ends of the flow tube 2(R) are respectively connected to the splitter 1(L) and splitter 1(R).

The gusset plate 6(L), the gusset plate 6(R), the gusset plate 7(L), the gusset plate 7(R), the gusset plate 10(L), the gusset plate 10(R), the gusset plate 11(L) and the gusset plate 11(R) are all fixed to the sleeve 3, and all sleeve the outer sides of the flow tube 2(L) and the flow tube 2(R) to limit the flow tube 2(L) and the flow tube 2(R).

The region where the flow tube 2(L) and the flow tube 2(R) are located between the gusset plate 6(L) and the gusset plate 6(R) is defined as the first measurement zone A. The first measurement zone A is provided with the driving device 4, the detection device 5(L) and the detection device 5(R). The first measurement zone A measures the mass flow and the density of the medium in the flow tube 2(L) and the flow tube 2(R) with Coriolis principle. The detection device 5(L) and the detection device 5(R) are respectively located on both sides of the driving device 4, and both the detection device 5(L) and the detection device 5(R) are independent from the driving device 4.

The region where the flow tube 2(L) and the flow tube 2(R) are located between the gusset plate 10(L) and the gusset plate 10(R) is defined as the second measurement zone B. The second measurement zone B is provided with the driving device 8, the detection device 9(L) and a detection device 9(R). The second measurement zone B measures the mass flow and the density of the medium in the flow tube 2(L) and the flow tube 2(R) with Coriolis principle as well. The detection device 9(L) and the detection device 9(R) are respectively located on both sides of the driving device 8, and both the detection device 9(L) and the detection device 9(R) are independent from the driving device 8.

The first measurement zone A and the second measurement zone B are both V-shaped, and the portions, located between the first measurement zone and the second measurement zone, of the flow tube 2(L) and the flow tube 2(R) are linear. Through intercomparison of the two measurement zones, the first measurement zone A is deeply V-shaped, and the second measurement zone B are shallowly V-shaped, thus avoiding simultaneous resonance of the first measurement zone A and the second measurement zone B.

In order to prevent the vibration of the first measurement zone A and the vibration of the second measurement zone B from interfering with each other, the gusset plate 7(L), the gusset plate 7(R), the gusset plate 11(L) and the gusset plate 11(R) are arranged between the first measurement zone A and the second measurement zone B to isolate the vibration and eliminate the interference.

### Embodiment II

Referring to FIG. 4, this embodiment provides a Coriolis flowmeter with multiple measurement zones. This embodiment is substantially the same as embodiment I , and the differences are as follows.

The first measurement zone A and the second measurement zone B are separated by only one gusset plate 2-6(R). The thickness of the gusset plate 2-6(R) is larger than those of the gusset plate 6 (R), the gusset plate 7(R), the gusset plate 10(L) and the gusset plate 11(L) in embodiment I , so although the number of gusset plates is reduced, the stability and vibration isolation effect can also be ensured.

### Embodiment III

Referring to FIG. 5, this embodiment provides a Coriolis flowmeter with multiple measurement zones.

The portions, located between the gusset plate 3-6(L) and the gusset plate 3-6(R), of the two flow tubes are the first measurement zone 3-A, and the first measurement zone 3-A is V-shaped. The portions, located between the gusset plate 3-10(L) and the gusset plate 3-10(R), of the two flow tubes are the second measurement zone 3-B, and the second measurement zone 3-B is linear. Each measurement zone has a corresponding driving device and corresponding detection devices, and the driving device and the detection devices are not directly connected.

This embodiment is substantially the same as embodiment , and the differences are as follows.

The second measurement zone 3-B in this embodiment is linear, and the second measurement zone B in embodiment I is V-shaped.

This embodiment has the advantage that the linear portion is not sensitive to wear, and the linear tube body can reduce pressure loss.

### Embodiment IV

Referring to FIG. 6, the embodiment provides a Coriolis flowmeter with multiple measurement zones. The first measurement zone 4-A is provided with the driving device 4-4 and the detection devices 4-5(L) and 4-5(R). The portions, located between the gusset plate 4-10(L) and the gusset plate 4-10(R), of the two flow tubes are defined as the second measurement zone 4-B, and the second measurement zone 4-B is provided with the driving device 4-8 and the detection device 4-9.

This embodiment is substantially the same as embodiment I , and the differences are as follows.

In this embodiment, the driving device 4-8 and the detection device 4-9 are integrated into an entire structure to meet the functional requirement of density measurement.

### Embodiment V

Referring to FIG. 7, the embodiment provides a Coriolis flowmeter with multiple measurement zones. The Coriolis flowmeter is provided with the first measurement zone 5-A and the second measurement zone 5-B.

This embodiment is substantially the same as embodiment III, and the differences are as follows.

In the second measurement zone 5-B, the driving device and the detection device are integrated into an entire structure to meet the functional requirement of density measurement.

An expected natural vibration is applied by the driving device of the second measurement zone 5-B, so that the flow tube is twisted to measure the viscosity of the medium in the flow tube.

In this way, the first measurement zone 5-A can measure the mass flow and the density of the medium, and the second measurement zone 5-B can measure the density and the viscosity of the medium.

### Embodiment VI

Referring to FIG. 8, the embodiment provides a Coriolis flowmeter with multiple measurement zones. A single flow tube 6-2 is used. The portion, located between the gusset plate 6-6(L) and the gusset plate 6-6(R), of the flow tube 6-2 is the first measurement zone 6-A, and the portion, located between the gusset plate 6-10(L) and the gusset plate 6-10(R), of the flow tube 6-2 is the second measurement zone 6-B.

The single flow tube 6-2 is used in this embodiment, which is suitable for the situation that the flow of the medium is small.

### Embodiment VII

Referring to FIG. 9 and FIG. 10, the embodiment provides a Coriolis flowmeter with multiple measurement zones.

The portions, located between the gusset plate 7-6(L) and the gusset plate 7-6(R), of the flow tube 7-2(L) and the flow tube 7-2(R) are the first measurement zone 7-A, and the portions, located between the gusset plate 7-10(L) and the gusset plate 7-10(R), of the flow tube 7-12(L) and the flow tube 7-12(R) are the second measurement zone 7-B.

Both the first measurement zone 7-A and the second measurement zone 7-B measure the mass flow and the density with Coriolis principle.

It should be noted that, in this embodiment, the portion of the flow tube 7-2(L) in the first measurement zone 7-A is connected with the portion of the flow tube 7-2(L) in the second measurement zone 7-B through one connector 7-7, and the portion of the flow tube 7-2(R) in the first measurement zone 7-A is connected with the portion of the flow tube 7-2(R) in the second measurement zone 7-B through another connector 7-7. Therefore, the first measurement zone 7-A and the second measurement zone 7-B can respectively perform bending forming, and then are connected through the connector 7-7. The characteristics, such as material, wall thickness and cross-sectional shape, of the first measurement zone 7-A and the second measurement zone 7-B may be different as long as the first measurement zone 7-A and the second measurement zone 7-B can be adapted to the ends of the connector 7-7. Compared with the technical solutions in which the first measurement zone and the second measurement zone are one-piece in embodiment I to embodiment VI, in this embodiment, the first measurement zone 7-A and the second measurement zone 7-B are connected through the connector 7-7, so that the difficulty of bending forming can be reduced.

It is understandable that, in addition to the solution that the first measurement zone 7-A and the second measurement zone 7-B are connected through the connector 7-7, those skilled in the art can also connect the first measurement zone 7-A and the second measurement zone 7-B by means of bonding or welding (namely the connector 7-7 is not provided).

### Embodiment VIII

The embodiment provides a Coriolis flowmeter with multiple measurement zones. The Coriolis flowmeter is provided with a first measurement zone and a second measurement zone, and the first measurement zone and the second measurement zone are both V-shaped.

The driving device is arranged at the bottom of a V-shaped structure of the first measurement zone. Each of both sides of the V-shaped structure of the first measurement zone is provided with one detection device. The two detection devices are facing the inward concave side of the V-shaped structure.

The driving device is arranged at the bottom of a V-shaped structure of the second measurement zone. Each of both sides of the V-shaped structure of the second measurement zone is provided with one detection device. The two detection devices are facing the inward concave side of the V-shaped structure.

It needs to be noted that in embodiment I to embodiment VII, the detection devices of the first measurement zone are facing the outward convex side of the V-shaped structure. When the second measurement zone is V-shaped, the detection devices of the second measurement zone are facing the inward concave side of the V-shaped structure. The detection device facing outward can effectively increase the phase difference of the detection signals, and the detection device facing inward can make the structure more compact.

According to different actual needs, the orientation of the detection device can be flexibly selected by those skilled in the art. For example, the detection devices of the first measurement zone are facing the outward convex side of the V-shaped structure. When the second measurement zone is V-shaped, the detection devices of the second measurement zone are facing the outward convex side of the V-shaped structure.

Specific examples are used for illustration of the principles and implementation methods of the present invention. The description of the above-mentioned embodiments is used to help illustrate the method and the core principles of the present invention; and meanwhile, those skilled in the art can make various modifications in terms of specific embodiments and scope of application in accordance with the teachings of the present invention. In summary, the contents of this specification should not be understood as the limitation of the present invention.

## Claims

1. A Coriolis flowmeter with multiple measurement zones, comprising at least one flow tube and a flow transmitter, wherein the at least one flow tube has at least a first measurement zone and a second measurement zone; wherein a first driving device and a first detection device are installed in the first measurement zone, and a second driving device and a second detection device are installed in the second measurement zone; wherein both the first detection device and the second detection device are connected to the flow transmitter to transmit respective measured values to the flow transmitter; and wherein the first measurement zone measures at least one of mass flow and density of a medium with Coriolis principle, and the second measurement zone measures the mass flow and/or the density of the medium simultaneously with the first measurement zone.

2. The Coriolis flowmeter with multiple measurement zones according to claim 1, wherein the at least one flow tube comprises a plurality of flow tubes, and the plurality of flow tubes have the same material, track, wall thickness and cross-sectional shape.

3. The Coriolis flowmeter with multiple measurement zones according to claim 1, wherein the at least one flow tube comprises a first section and a second section, the first measurement zone is located in the first section, the second measurement zone is located in the second section, and the first section is in splicing connection with the second section.

4. The Coriolis flowmeter with multiple measurement zones according to claim 3, wherein the at least one flow tube comprises a connector, two ends of the connector are respectively connected to the first section and the second section to achieve indirect splicing connection of the first section and the second section.

5. The Coriolis flowmeter with multiple measurement zones according to claim 1, wherein at least one of the first measurement zone and the second measurement zone is a straight tube to measure viscosity of the medium at the straight tube.

6. The Coriolis flowmeter with multiple measurement zones according to claim 1, wherein the first driving device is fixedly connected with the first detection device, and the second driving device is fixedly connected with the second detection device.

7. The Coriolis flowmeter with multiple measurement zones according to claim 1, wherein the first driving device and the first detection device are separated from each other, the second driving device and the second detection device are separated from each other.

8. The Coriolis flowmeter with multiple measurement zones according to claim 1, wherein at least one gusset plate is arranged between the first measurement zone and the second measurement zone.

9. The Coriolis flowmeter with multiple measurement zones according to claim 1, wherein parameters jointly measured by the first measurement zone and the second measurement zone comprise the mass flow of the medium, the flow transmitter is configured to calculate weighted average of measured values of the mass flow obtained by the first measurement zone and the second measurement zone; and/or, wherein the parameters jointly measured by the first measurement zone and the measurement zone comprise the density of the medium, the flow transmitter is configured to calculate weighted average of measured values of the density obtained by the first measurement zone and the second measurement zone.

10. The Coriolis flowmeter with multiple measurement zones according to claim 1, wherein an alarm threshold value is set in the flow transmitter to enable the flow transmitter to send out an alarm signal when an absolute value of a difference between the parameters jointly measured by the first measurement zone and the second measurement zone is greater than the alarm threshold value.
